# EUROPEAN PATENT APPLICATION

(11) **EP 3 838 906 A1**
(43) Date of publication of application: **23.06.2021**
(21) Application number: 19218960.3
(22) Date of filing: 20.12.2019
(51) Int. Cl.: C07F 7/22

(54) **A PROCESS FOR THE PREPARATION OF TRIBUTYLTIN CHLORIDE WITH HIGH PURITY**

(71) Applicant: LANXESS Organometallics GmbH, 59192 Bergkamen (DE)
(72) Inventor: MEYER, Nils, 59368 Werne (DE); SCHLINGE, Britta, 44287 Bergkamen (DE); KIELBUS, Damian, 59174 Kamen (DE); HEITMANN, Peter, 58730 Fröndenberg (DE)
(74) Representative: HGF

(57) **Abstract**

The present invention relates to a process for the preparation of tributyltin chloride with high purity from mixtures comprising tributyltin chloride and at least dibutyltin dichloride by reactive distillation without the need to employ fractionation or rectification equipment.

## Description

### Field of the invention

The present invention relates to a process for the preparation of tributyltin chloride with high purity from mixtures comprising tributyltin chloride and at least dibutyltin dichloride by reactive distillation.

### Background of the invention

Even though banned in some jurisdictions tributyltin chloride is a chemical inter alia used as disinfectant against infestation by fungi and mites in textiles, leather, paper and wood as well as an additive for ship paints to combat algae and snails in antifouling paints or in tires to reduce their frictional resistance.

Tributyltin chloride is further used as a versatile reagent in organic synthesis in particular for the preparation of pharmaceuticals and various intermediates thereof.

Its preparation is typically accomplished by reaction of tin tetrachloride and tetrabutyl tin, whereby the latter can be obtained by alkylation of tin tetrachloride with tributyl aluminum. Alternatively, alkylation of tin tetrachloride with tributyl aluminum may under certain known conditions directly result in the formation of tributyltin chloride.

Each of the aforementioned processes results in a reaction mixture that besides the desired tributyltin chloride as a main component comprises dibutyltin dichloride, monobutyltin trichloride as well as the starting materials tetrabutyl tin and/or tin tetrachloride in varying amounts.

Workup is routinely effected by distillation. While removal of monobutyltin trichloride, tetrabutyl tin and tin tetrachloride is not an issue, the elimination of dibutyltin dichloride from the final product remains a challenge due to the close boiling points of tributyltin chloride and dibutyltin dichloride and is all the more desired because dibutyltin dichloride may cause undesired side reactions when employed as a reagent for organic synthesis.

So there is still a need for an efficient yet easy way to produce tributyltin chloride in particular having a very low content of dibutyl tin dichloride.

### Summary of the invention

There is now provided a process for the preparation of tributyltin chloride with high purity the process comprising at least the steps of
a) contacting a mixture comprising at least tributyltin chloride and dibutyltin dichloride with at least one compound selected from the group of alkali metal oxides, alkali metal hydroxides, earth alkali metal oxides and earth alkali metal hydroxides thereby obtaining a treated mixture and
b) distilling the treated mixture obtained according to step a) to obtain the purified tributyltin chloride

The invention further encompasses tributyltin chloride having a content of dibutyltin di chloride of less than 0.1 % by weight, preferably less than 0.05 % by weight.

These and further features and advantages of the present invention will be apparent from the following detailed description and claims.

### Detailed description of the invention

The scope of the invention also encompasses any desired combinations of the ranges and areas of preference specified for each feature hereinafter.

As used herein the term distillation encompasses all techniques in which liquid compounds are purified or separated via intermediate vaporization. This includes distillation, fractionation, rectification, flashing and similar techniques typically used to fulfil this purpose.

In step a) a mixture comprising at least tributyltin chloride and dibutyltin dichloride is contacted with at least one compound selected from the group of alkali metal oxides, alkali metal hydroxides, earth alkali metal oxides and earth alkali metal hydroxides thereby obtaining a treated mixture.

Examples for suitable alkali metal oxides include sodium oxide, lithium oxide, potassium oxide.

Examples for suitable alkali metal hydroxides include sodium hydroxide, lithium hydroxide, potassium hydroxide.

Examples for suitable earth alkali metal oxides include magnesium oxide, calcium oxide and barium oxide.

Examples for suitable earth alkali metal hydroxides include magnesium hydroxide, calcium hydroxide and barium hydroxide.

All of the aforementioned compounds may be employed either alone or in combination with each other and either in solid, dispersed or wetted from and where hydroxides are employed also as solutions.

In a preferred embodiment sodium hydroxide is employed. In one embodiment sodium hydroxide is employed in solid form like e.g. as pellets or flakes or as wetted pellets.

It is apparent to those skilled in the art that the amount of alkali metal oxides, alkali metal hydroxides, earth alkali metal oxides and earth alkali metal hydroxides or mixtures thereof employed in step a) depends on the oxide or hydroxide employed and the amount of dibutyltin dichloride to be removed but is typically and for example between 0.05 wt-% and 5 wt-% of the mixture comprising at least tributyltin chloride and dibutyltin dichloride, preferably between 0.1 and 1 wt.-% and more preferably between 0.2 and 0.8 wt-%.

In one embodiment water is additionally added. In a preferred embodiment the amount of water added does not exceed the amount of the oxide and/or hydroxide employed by weight.

In one embodiment dibutylether is additionally added. In a preferred embodiment the amount of dibutylether added is between 0.1 and 10 wt-% of the mixture comprising at least tributyltin chloride and dibutyltin dichloride, preferably 1 to 5 wt-%.

In one embodiment the mixture comprising at least tributyltin chloride and dibutyltin dichloride further comprises monobutyl tin trichloride, tin tetrachloride and tetrabutyl tin, preferably in amounts of 5 wt-% or less, more preferably 2 wt-% or less and even more preferably 0.5 wt-% or less and yet even more preferably 0.1 wt-% or less or is free of aforementioned additional components.

In one embodiment the mixture comprising at least tributyltin chloride and dibutyltin dichloride comprises a weight ratio of tributyltin chloride to dibutyltin dichloride of at least 10:1, preferably at least 20:1 or between 20:1 and 1000:1 , more preferably at least 30:1 or between 30:1 and 200:1 and most preferably between 40:1 and 100:1.

As used herein the term contacting encompasses any sequence of addition. The duration of the contact is in principle not limited, however to obtain the desired result a duration of 1 minute to 5 hours, preferably 5 mins to 3 hours and more preferably 10 mins to 3 hours is sufficient.

The contacting may take place for example at a temperature of -20° to 120°C, preferably at 0° to 100°C and more preferably at 20° to 100°C or ambient temperature.

Where solid oxides and/or hydroxides are employed mechanical mixing may be advantageous.

In and further and preferred embodiment steps a) and b) are combined and performed in the same apparatus so that no intermediate removal of components such as the oxides or hydroxides and any compounds formed in the treated mixture need to be removed.

In step b) the treated mixture obtained in step a) is distilled to obtain the purified tributyltin chloride. This can be effected in any manner known to those skilled in the art and in any distillation apparatus known to be suitable for that purpose.

In particular and this is a huge advantage of the present invention the distillation can be effected in a simple distillation apparatus or by simple flashing without the necessity of applying multiple column trays or structured packings or the like.

The boiling pints of tributyltin chloride and dibutyltin dichloride are 140°C and 135°C at 13 hPa respectively. As a consequence a preferred pressure range to perform step b) is between 0.1 hPa to 100 hPa, preferably 5 hPa to 50 hPa, even more preferably 5 hPa to 30 hPa.

In one embodiment distillation is performed such that at least 90 wt-% of the tributyltin chloride employed in step a) is obtained after distillation, preferably at least 95 wt-% or, in another embodiment at least 98 wt-%. The remainder is handled as distillation residue and either recycled or disposed.

The distillation may be performed batchwise or continuously.

In step b) a highly pure tributyltin chloride is obtained.

The purity of tributyltin chloride obtainable via the present invention is typically 99.85 or more, preferably 99.9 wt-% or more and even more preferably 99.95 wt-% or more.

The content of dibutyltin dichloride is typically less than 0.1 wt-%, preferably less than 0.05 % by weight or 0.01 to 0.04 wt-%.

Preferably the content of other tin compounds such as monobutyltin trichloride, tetrabutyl tin chloride and tin tetrachloride is typically less than 0.05 wt-%, preferably less than 0.01 wt-% for example below detection limits.

The following examples will illustrate the invention in further detail:

### Examples

### Example 1 (for comparison):

Equipment: 500ml 3-necked flask, Claisen bridge, thermometer, magnetic stirrer, oil heating bath, vacuum pump.

Procedure: 250 grams of mixture comprising 98, 17 wt-% of tributyltin chloride (TBTCl) and 1.83 wt-% dibutyltin dichloride (DBTCl) was placed into the 3-necked flask, the apparatus closed and evacuated to a pressure of around 1 hPa.

The heating bath was heated slowly until the mixture started to boil (usual bath temperature 120 to 136°C; internal temperature 97 to 104°C; vapour temperature 86 to 102°C).

Several fractions of the distillate were taken and analyzed for their DBTCl content.

| **Fraction** | **Mass [g]** | **Content DBTCl [wt.-%]** | **Content DBTCl [g]** |
|---|---|---|---|
| Fraction 1 | 28.5 | 3.20 | 0.91 |
| Fraction 2 | 99.5 | 2.34 | 2.33 |
| Fraction 3 | 86 | 1.40 | 1.20 |
| Distillation residue | 28.5 | 0.86 | 0.25 |
| **Sum** | **242.5** | | **4.69** |

The remainder to 250 g were solid species in the distillation residue that were not analyzed for their chemical composition. The same applies to all further examples accordingly.

Result: Its apparent that mere distillation is not sufficient to significantly lower the DBTCl content of TBTCl.

### Example 2 (for comparison):

The equipment and the procedure were the same as in example 1 with the only difference being: that 5,1 grams of dibutylether were added to 253 grams of the mixture also used in example 1.

| **Fraction** | **Mass [g]** | **Content DBTCl [wt.-%]** | **Content DBTCl [g]** |
|---|---|---|---|
| Fraction 1 | 26.00 | 3.48 | 0.90 |
| Fraction 2 | 170.70 | 1.81 | 3.09 |
| Distillation residue | 51.70 | 1.41 | 0.73 |
| **Sum** | **248.4** | | **4.72** |

Result: Its apparent that the addition of dibutylether does not aid the lowering of the DBTCl content of TBTCl.

### Example 3 (according to the invention):

The equipment and the procedure were the same as in example 1 with the only difference being: that
a) 5 mls of 25 wt-% sodium hydroxide solution were placed into the 3-necked flask heated and evacuated to dryness leaving a fine layer of sodium hydroxide behind before
b) 5.1 grams of dibutylether
and the 250 grams of the mixture also used in example 1 were added.

| **Fraction** | **Mass [g]** | **Content DBTCl [wt.-%]** | **Content DBTCl [g]** |
|---|---|---|---|
| Fraction 1 | 35 | 0.08 | 0.03 |
| Fraction 2 | 122 | 0.04 | 0.05 |
| Fraction 3 | 45 | 0.03 | 0.01 |
| Distillation residue | 30.5 | 13.33 | 4.07 |
| **Sum** | **232.5** | | **4.16** |

Result: Its apparent that the addition of dibutylether and solid sodium hydroxide leads to an unexpected enrichment of DBTCl in the distillation residue allowing to obtain fractions having a DBTCl content as low as 0.03 wt-%, in particular even without using fractionation or rectification equipment.

### Example 4 (according to the invention):

The equipment and the procedure were the same as in example 3 with the only difference being that no dibutylether was added and 241.5 grams of the mixture also used in example 1 was used.

| **Fraction** | **Mass [g]** | **Content DBTCl [wt.-%]** | **Content DBTCl [g]** |
|---|---|---|---|
| Fraction 1 | 1.6 | 0.05 | 0.00 |
| Fraction 2 | 147.6 | 0.04 | 0.06 |
| Fraction 3 | 77.6 | 0.03 | 0.02 |
| Distillation residue | 3.0 | 37.96 | 1.14 |
| **Sum** | **229.8** | | **1.22** |

Result: Its apparent that the addition of solid sodium hydroxide alone leads to an unexpected enrichment of DBTCl in the distillation residue allowing to obtain fractions having a DBTCl content as low as 0.03 wt-%.

### Example 5 (according to the invention):

The equipment and the procedure were the same as in example 1 with the difference being that solid sodium hydroxide pellets (1.25 grs) were added instead of the solution of sodium hydroxide and the 249.5 grams of the mixture employed contained 1.20 wt-% of DBTCl and 98.80 wt-% of TBTCl.

| **Fraction** | **Mass [g]** | **Content DBTCl [wt.-%]** | **Content DBTCl [g]** |
|---|---|---|---|
| Fraction 1 | 4.8 | 0.26 | 0.01 |
| Fraction 2 | 211.4 | 0.02 | 0.04 |
| Distillation residue | 24.1 | 9.64 | 2.32 |
| **Sum** | **240.3** | | **2.38** |

Result: Its apparent that the addition of solid sodium hydroxide in form of pellets allows to obtain fractions having a DBTCl content as low as 0.02 wt-%.

### Example 6 (according to the invention):

The equipment and the procedure were the same as in example 1 with the difference being that solid sodium hydroxide pellets (1.25 grs) and one drop of water were added instead of the solution of sodium hydroxide and the 258.4 grams of the mixture employed contained 1.58 wt-% of DBTCl and 98.42 wt-% of TBTCl.

Further. the mixture. the sodium pellets and the drop of water were heated to 90°C for two hours before distillation

| **Fraction** | **Mass [g]** | **Content DBTCl [wt.-%]** | **Content DBTCl [g]** |
|---|---|---|---|
| Fraction 1 | 5.8 | 0.03 | 0.00 |
| Fraction 2 | 61.5 | 0.03 | 0.02 |
| Fraction 3 | 152.2 | 0.03 | 0.05 |
| Distillation residue | 33.5 | 12.33 | 4.13 |
| **Sum** | **253.0** | | **4.20** |

Result: Its apparent that the addition of solid sodium hydroxide in form of pellets and traces of water allows to obtain fractions having a DBTCl content as low as 0.03 wt-%.

## Claims

1. A process for the preparation of pure tributyltin chloride the process comprising at least the steps of
a) contacting a mixture comprising at least tributyltin chloride and dibutyltin dichloride with at least one compound selected from the group of alkali metal oxides, alkali metal hydroxides, earth alkali metal oxides and earth alkali metal hydroxides thereby obtaining a treated mixture and
b) distilling the treated mixture obtained according to step a) to obtain the purified tributyltin chloride.

2. The process according to claim 1, wherein the at least one compound selected from the group of alkali metal oxides, alkali metal hydroxides, earth alkali metal oxides and earth alkali metal hydroxides is selected from the following compounds:
sodium oxide, lithium oxide, potassium oxide, sodium hydroxide, lithium hydroxide, potassium hydroxide, magnesium oxide, calcium oxide and barium oxide, magnesium hydroxide, calcium hydroxide and barium hydroxide, whereby sodium hydroxide is preferred.

3. The process according to claim 1 or 2, wherein the at least one compound selected from the group of alkali metal oxides, alkali metal hydroxides, earth alkali metal oxides and earth alkali metal hydroxides is employed in solid, dispersed or wetted form and, where hydroxides are employed, alternatively as solution.

4. The process according to anyone of claims 1 to 3, wherein the total amount of compounds selected from the group of alkali metal oxides, alkali metal hydroxides, earth alkali metal oxides and earth alkali metal hydroxides is between 0.05 wt-% and 5 wt-% of the mixture comprising at least tributyltin chloride and dibutyltin dichloride, preferably between 0.1 and 1 wt.-% and more preferably between 0.2 and 0.8 wt-%.

5. The process according to anyone of claims 1 to 4, wherein dibutylether is added.

6. The process according to anyone of claims 1 to 5, wherein the mixture comprising at least tributyltin chloride and dibutyltin dichloride either further comprises monobutyl tin trichloride and/or tin tetrachloride and/or tetrabutyl tin, preferably in amounts taken altogether of 5 wt-% or less, more preferably 2 wt-% or less and even more preferably 0.5 wt-% or less and yet even more preferably 0.1 wt-% or less or is free of aforementioned additional components.

7. The process according to anyone of claims 1 to 6, wherein the mixture comprising at least tributyltin chloride and dibutyltin dichloride comprises a weight ratio of tributyltin chloride to dibutyltin dichloride of at least 10:1, preferably at least 20:1 or between 20:1 and 1000:1 , more preferably at least 30:1 or between 30:1 and 200:1 and most preferably between 40:1 and 100:1.

8. The process according to anyone of claims 1 to 7, wherein in step a) the contacting takes place at a temperature of -20° to 120°C, preferably at 0° to 100°C and more preferably at 20° to 100°C or ambient temperature.

9. The process according to anyone of claims 1 to 8, wherein steps a) and b) are combined and performed in the same apparatus.

10. The process according to anyone of claims 1 to 9, wherein the distillation in step b) is performed at a pressure between 0.1 hPa to 100 hPa, preferably 5 hPa to 50 hPa, even more preferably 5 hPa to 30 hPa.

11. The process according to anyone of claims 1 to 10, wherein the distillation in step b) is performed such that at least 90 wt-% of the tributyltin chloride employed in step a) is obtained after distillation, preferably at least 95 wt-% or, in another embodiment at least 98 wt-%.

12. The process according to anyone of claims 1 to 10, wherein the distillation is performed batchwise or continuously.

13. Tributyltin chloride having a purity of 99.85 or more, preferably 99.9 wt-% or more and even more preferably 99.95 wt-% or more.

14. The tributyltin chloride of claim 13, having a content of dibutyltin dichloride of less than 0.1 wt-%, preferably less than 0.05 % by weight or 0.01 to 0.04 wt-%.
